(19) Europäisches Patentamt
European Patent Office
Office européen des brevets

(11) Veröffentlichungsnummer: **0 221 384 B1**

(12) **EUROPÄISCHE PATENTSCHRIFT**

(45) Veröffentlichungstag der Patentschrift: **26.07.89**

(51) Int. Cl.⁴: **C 08 K 5/44**, C 08 L 21/00

(21) Anmeldenummer: **86113936.8**

(22) Anmeldetag: **08.10.86**

# (54) Vulkanisierbare Kautschukmischung und deren Vulkanisation.

(30) Priorität: **18.10.85 DE 3537073**

(43) Veröffentlichungstag der Anmeldung: **13.05.87 Patentblatt 87/20**

(45) Bekanntmachung des Hinweises auf die Patenterteilung: **26.07.89 Patentblatt 89/30**

(84) Benannte Vertragsstaaten: **BE DE ES FR GB IT NL**

(56) Entgegenhaltungen:
**EP-A- 0 018 620**
**FR-A- 2 119 623**
**US-A- 2 382 813**

**Die Akte enthält technische Angaben, die nach dem Eingang der Anmeldung eingereicht wurden und die nicht in dieser Patentschrift enthalten sind.**

(73) Patentinhaber: **BAYER AG, D-5090 Leverkusen 1 Bayerwerk (DE)**

(72) Erfinder: **Schubart, Rüdiger, Dr., An der Engelsfuhr 27, D-5060 Bergisch Gladbach 2 (DE)**
Erfinder: **Eholzer, Ulrich, Dr., Gerstenkamp 10, D-5000 Köln 80 (DE)**
Erfinder: **Kempermann, Theo, Dr., Friedrich-Schmidt-Strasse 16a, D-5000 Köln 41 (DE)**
Erfinder: **Roos, Ernst, Dr., Am Geus Garten 6, D-5068 Odenthal-Osenau (DE)**

EP 0 221 384 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft eine vulkanisierbare Kautschukmischung bestehend aus einem Vulkanisationssystem aus Schwefel oder einem Schwefelspender, einem Mercapto- bzw. Sulfenamidbeschleuniger, einem Nitrophenylsulfenamid, gegebenenfalls einem üblichen Zusatzbeschleuniger und Natur- und/oder Synthesekautschuk, sowie üblichen Zusätzen sowie deren Vulkanisation.

Erfindungsgemäß lassen sich Kautschukmischungen herstellen, die eine verbesserte Reversionsbeständigkeit besitzen, was die Anwendung höherer Vulkanisationstemperaturen ohne Beeinträchtigung von Vulkanisateigenschaften, z.B. Spannungswert, ermöglicht.

Unter Reversion versteht man ein Wiederabfallen des Vernetzungsgrades und mechanischer Werte von Vulkanisaten (wie Zugfestigkeit, Weiterreißfestigkeit, Elastizität) bei einer Fortführung der Vulkanisation über das Optimum hinaus. Reversion tritt auf bei der Vulkanisation von Dien-Kautschuken, insbesondere Naturkautschuk und synthetischem Polyisopren bei hohen Vulkanisationstemperaturen bzw. langen Vulkanisationszeiten, wie sie bei der Herstellung voluminöser Artikel (z.B. LKW-Reifen) erforderlich sind. Die Anwendung wirtschaftlich wünschenswerter hoher Vulkanisationstemperaturen wird durch das Auftreten der Reversion begrenzt.

Eine Verbesserung der Reversionsbeständigkeit war bisher nur in sehr begrenztem Umfang möglich.

Es ist bekannt, daß die Reversionsbeständigkeit von Vulkanisationssystemen durch Verwendung verringerter Schwefel-Dosierungen verbessert werden kann. Während bei der «Normal-Schwefel-Vulkanisation» Schwefel-Mengen von ca. 1,8-2,5 phr (Gew.-Teile bezogen auf 100 Gew.-Teile Kautschuk) verwendet werden, arbeiten «Semi-Efficient-Systeme» mit mittleren Schwefel-Mengen von ca. 1-1,8 phr und «Efficient-Systeme» mit Schwefel-Dosierungen von unter 1 phr. Im Vergleich zur Normal-Schwefel-Vulkanisation treten mit verringerten Schwefel-Mengen jedoch Nachteile auf hinsichtlich Rißbeständigkeit, Weiterreißfestigkeit, Abriebbeständigkeit und Cordhaftung der Vulkanisate, was die Anwendung der Vulkanisation mit niederen bzw. mittleren Schwefel-Mengen begrenzt. Es ist zum Beispiel bei der Reifen-Herstellung nicht möglich, die Schwefel-Dosierung unter den Bereich mittlerer Dosierung (ca. 1,5 phr) zu senken.

Aus der EP-A 18 620 sind Vulkanisationssysteme enthaltend

- Schwefel oder Schwefelspender,
- Mercapto- bzw. Sulfenamidbeschleuniger,
- einen üblichen Zusatzbeschleuniger und
- ein kernsubstituiertes Phenylsulfenamid

bekannt. Der Phenylrest dieses Phenylsulfenamids kann u.a. durch Halogen, Nitro, Cyano, $-CF_3$, $-CCl_3$, Alkoxycarbonyl mit $C_1$-$C_4$-Alkyl im Alkoxyrest, $C_1$-$C_4$-Alkyl substituiert sein.

Das Stickstoffatom der Sulfenamidgruppe kann durch $C_1$-$C_{10}$ -Alkyl oder -Alkenyl, $C_5$-$C_7$-Cycloalkyl oder -Cycloalkenyl, gegebenenfalls mit $C_1$-$C_4$-Alkylresten ein- oder mehrfach substituiertes $C_6$-$C_{10}$-Aryl substituiert sein, wobei auch zwei am Stickstoffatom stehende Substituenten gemeinsam einen 4- bis 10gliedrigen, carbocyclischen Ring bilden können, der ggf. ein Heteroatom wie N, O, S im Ring enthält.

In der FR-A 2 119 623 werden Sulfenamide als Vulkanisationsverzögerer für Kautschuk beschrieben, wobei die am Stickstoff der Sulfenamidgruppe stehenden Substituenten zusammen mit dem Stickstoffatom einen Sechsring bilden. Diese Verbindungen umfassen keine Nitrosubstituierten Sulfenamide. Vulkanisationsverzögerer haben keinen Einfluß auf die Reversion.

Es ist weiter bekannt, daß die Art der verwendeten Vulkanisationsbeschleuniger einen Einfluß auf die Reversionsbeständigkeit der Kautschuk-Mischungen hat. Während Ultra-Beschleuniger, wie Dithiocarbamate, Thiurame, sowie basische Beschleuniger, wie Diphenylguanidin, niedrige Reversionsbeständigkeit ergeben, verhalten sich Mercapto-Beschleuniger wie Mercaptobenzthiazol, Dibenzothiazyldisulfid und das Zinksalz des Mercaptobenzthiazols bzw. Sulfenamid-Beschleuniger wie Benzothiazyl-(2)-cyclohexylsulfenamid, Benzothiazyl-(2)-tert.-butylsulfenamid, Benzothiazyl-(2)-morpholin-sulfenamid und Benzothiazyl-(2)-dicyclohexylsulfenamid günstiger hinsichtlich Reversionsbeständigkeit.

Es ist ferner bekannt, daß der Zusatz von Vulkanisationsbeschleunigern des Dithiophsphat-Typs, wie Zinkdibutyldithiophosphat zu den oben beschriebenen Vulkanisationssystemen die Reversionsbeständigkeit verbessert [H. Ehrend, Gummi, Asbest, Kunststoffe 3c (1977), S. 68-71). Diese Beschleuniger verbessern zwar die Reversion, verkürzen aber die Anvulkanisationszeit in unerwünschter Weise. Dies stellt einen Nachteil dar, weil eine ausreichende Verarbeitungssicherheit insbesondere bei den Anwendungsgebieten erforderlich ist, bei denen eine Verbesserung der Reversionsbeständigkeit von besonderem Interesse ist, z.B. bei der Herstellung von LKW-Reifen und allgemein bei der Herstellung voluminöser Artikel.

Gegenstand der Erfindung ist somit eine vulkanisierbare Kautschukmischung, die die Reversionsbeständigkeit der Kautschukvulkanisate erhöht und gleichzeitig die Anvulkanisationszeit bei der Vulkanisation nicht verkürzt, bestehend aus natürlichem und/oder synthetischem Kautschuk aus halogenfreien Dienen und gegebenenfalls halogenfreien Comonomeren, den im folgenden angegebenen Vulkanisationssystem:

a) 0,1 bis 5 Gew.-Teile, bevorzugt 1,5 bis 2,5 Gew.-Teile Schwefel oder 0,2 bis 10 Gew.-Teile, bevorzugt 2 bis 5 Gew.-Teile eines Schwefelspenders

b) 0,1 bis 5 Gew.-Teile, bevorzugt 0,4 bis 2 Gew.-Teile eines Beschleunigers der Mercapto- bzw. Sulfenamidgruppe

c) 0 bis 5 Gew.-Teile, bevorzugt 0 bis 1 Gew.-Teile eines konventionellen Zusatzbeschleunigers und

d) 0,1 bis 5 Gew.-Teile, bevorzugt 0,4 bis 2,5 Gew.-Teile einer Verbindung der allgemeinen Formel

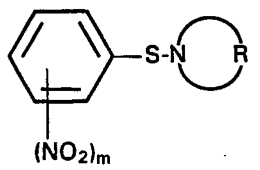

und gegebenenfalls weiteren üblichen Zusätzen.

Vorzugsweise enthält der Phenylring eine Nitrogruppe in o-Stellung.

R bildet zusammen mit dem Stickstoffatom einen Piperidinyl-, Morpholinyl-, Pyrrolidinyl-Rest, der durch 1 oder 2 Methylgruppen, eine zum Stickstoffatom o-ständige Oxogruppe, oder einen Piperazinylrest, der durch eine Methylgruppe, eine zum Stickstoffatom o-ständige Oxogruppe oder am zweiten Stickstoff durch

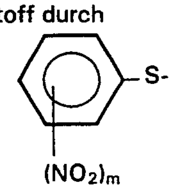

substituiert sein kann wobei m 1 oder 2 ist, oder einen Perhydroazepinyl-Rest.

Bevorzugt bedeuten R zusammen mit dem Stickstoffatom Pyrrolidinyl, Piperidinyl, Morpholinyl, N-Methylpiperazinyl, N-Ethylpiperazinyl, Piperazinyl, 2-Methylpiperazinyl.

Ein weiterer Gegenstand der Erfindung ist ein Verfahren zur Vulkanisation von Natur- und/oder Synthesekautschuk aus halogenfreien Dienen in Gegenwart von Schwefel und/oder Schwefelspendern, Vulkanisationsbeschleunigern und gegebenenfalls üblichen Zusätzen, das dadurch gekennzeichnet ist, daß man

a) 0,1-5 phr, vorzugsweise 1,5-2,5 phr Schwefel bzw. 0,2-10 phr, vorzugsweise 2,5 phr eines Schwefelspenders,
b) 0,1-5 phr, bevorzugt 0,4-2 phr eines Beschleunigers der Mercapto- bzw. Sulfenamidgruppe,
c) 0-5 phr, bevorzugt 0-1 phr eines konventionellen Zusatzbeschleunigers und
d) 0,1-5 phr, bevorzugt 0,4-2,5 phr einer Verbindung der Formel

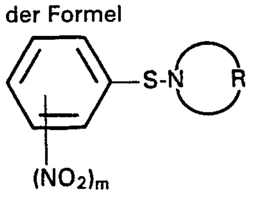

worin R und m die vorstehend genannte Bedeutung haben, getrennt oder gleichzeitig dem Kautschuk zugibt und anschließend in üblicher Weise vulkanisiert.

Als Schwefelspender der Gruppe a) werden Verbindungen angesehen, die unter Vulkanisationsbedingungen Schwefel abspalten. Dies sind u.a. Dimorpholyldisulfid (DTDM), Tetramethylthiuramdisulfid (TMTD) oder 2-(4-Morpholinyldithio)-benzothiazol.

Beschleuniger der Mercaptogruppe sind z.B. 2-Mercaptobenzthiazol (MBT), Dibenzothiazyl-disulfid (MBTS) oder das Zinksalz des 2-Mercaptobenzthiazols (ZMBT).

Beschleuniger der Sulfenamidgruppe sind z.B. Benzothiazyl-(2)-cyclohexylsulfenamid (CBS), Benzothiazyl-(2)-tert.-butylsulfenamid (TBBS), Benzothiazyl-(2)-morpholinsulfenamid (MBS), Benzothiazyl-(2)-dicyclohexylsulfenamid (DCBS), 2-(4-Morpholinyl-dithio)-benzothiazol, Morpholinyl-thiocarbamyl-sulfenmorpholid und Benzothiazyl-(2)-diisopropyl-sulfenamid.

Bevorzugt werden MBT, MBTS, CBS, TBBS und MES eingesetzt.

Konventionelle Zusatzbeschleuniger sind z.B. Tetramethylthiuramdisulfid (TMTD), Tetramethylthiurammonosulfid (TMTM), Zink-N-dimethyldithiocarbamat (ZDMC), Zink-N-diethyl-dithiocarbamat (ZDEC), Zink-N-dibutyldithiocarbamat (ZDBC), Zink-N-ethylphenyldithiocarbamat (ZEPC) und Zink-N-pentamethylendithiocarbamat (ZPMC).

Die unter d) aufgeführten Verbindungen lassen sich nach dem Verfahren gemäß J.I. Eitingon, Zh, Obshch. Khim. 34 (5), 1608 (1964), herstellen.

Die erfindungsgemäßen vulkanisierbaren Kautschukmischungen weisen Vorteile hinsichtlich Reversionsbeständigkeit nach längerer Vulkanisationszeit und/oder hohen Vulkanisationstemperaturen (z.B. 45 Min bei 180°C) hinsichtlich mechanischer Werte, wie Spannungswert, Zugfestigkeit, Bruchdehnung, Härte, Elastizität, Weiterreißfestigkeit, Zermürbungsbeständigkeit, Ermüdungsbeständigkeit, innerer Wärmebildung (heat build up), dynamischem Fließen und Abrieb auf.

Die Einzelkomponenten des Vulkanisationssystems können den Dienkautschuken bzw. Kautschuk-Mischungen vor dem Vulkanisieren entweder getrennt oder in Form eines Gemisches oder einer Kautschuk-Beschleuniger-Vormischung (vgl. Ullmann's Encyclopädie der technischen Chemie, 3. Auflage, Verlag: Urban u. Schwarzenberg, München-Berlin 1957, Band 9, Seite 364) zugesetzt werden.

Synthesekautschuke aus halogenfreien Dienen sind beispielsweise Polyisopren, Polybutadien, Styrol-Butadien-Kautschuk, Nitrilkautschuk und deren Verschnitte.

Die Dienkautschuke können alle üblichen Zusätze, wie Füllstoffe, insbesondere Ruße, Mineralöle, Weichmacher, Klebrigmacher, Beschleunigeraktivatoren, insbesondere Stearinsäure, Wachse, Alterungsschutzmittel, Ozonschutzmittel, Treibmittel, Farbstoffe, Pigmente, enthalten.

Die Vulkanisation der Dienkautschuke wird im allgemeinen bei Temperaturen von 100°C bis 300°C, bevorzugt bei 140°C bis 240°C, durchgeführt. Hierfür können alle in der Technik üblichen Vulkanisationsverfahren wie Pressenheizung, Heizung mit Heißdampf, Heißluft, Salzbad, Fließbett, Ultrahochfrequenz und Dampfrohr, verwendet werden.

*Verzeichnis der Abkürzungen und Testmethoden*

| | |
|---|---|
| IPPD: | N-Phenyl-N'-isopropyl-p-phenylendiamin |
| TMQ: | polymerisiertes 2,2,4-Trimethyl-dihydrochinolin |
| MBS: | Benzothiazyl-(2)-morpholinsulfenamid |
| Stufenheizung | 4 mm Klappen, Pressenheizung |
| $M_{300}$ (MPa): | Spannungswert bei 300% Dehnung DIN 53504 |

| | |
|---|---|
| F (MPa): | Zerreißfestigkeit, DIN 53504, Normring R 1 |
| D (%) | Bruchdehnung, DIN 53504, Normring R 1 |
| H (Shore A): | Härte Shore A, DIN 53504, Normring R 1 |
| E (%): | Rückprall-Elastizität, DIN 535512, 4 mm Klappe |
| Struktur nach Pohle (N): | Ringstruktur |
| Reversion (%): | aus Stufenheizung: $\frac{M_{300} \text{ nach } 45 \text{ min}/180°C}{M_{300}\text{-maximum bei } 150°C} \times 100$ |
| Anvulkanisationszeit $t_s$ (min): | Anvulkanisationszeit aus Vulkametermessung bei 130°C, Zeit bis zum Anstieg der Schubmodulkurve um 15 mm über das Minimum |
| Vulkameter: | Bayer-Vulkameter, Aufheizung jeweils 1 min |
| Ausvulkanisationszeit $t_{90}$ (min): | Ausheizzeit, Zeit bis zum Erreichen von 90% des maximalen Schubmoduls im Bayer-Vulkameter |

*Beispiel 1*

zeigt den Vergleich zwischen einem semi-efficient-System (1), das nur Schwefel und MBS enthält und einem erfindungsgemässen System (2), das ortho-Nitrophenyl-pyrrolidinyl-sulfenamid (Schmp. 50 - 52°C) enthält.

In einem Innenmischer wurde aus folgenden Bestandteilen eine Kautschukmischung angefertigt:

| | |
|---|---|
| Naturkautschuk | 100,0 phr |
| Ruß N 330 (HAF) | 55,0 phr |
| Aromatisches Mineralöl | 3,0 phr |
| Stearinsäure | 2,5 phr |
| Mikrokristallines Ozonschutzwachs | 1,0 phr |
| IPPD | 2,5 phr |
| TMQ | 1,5 phr |
| Zinkoxid | 5,0 phr |

Auf einem Laborwalzwerk wurden folgende Bestandteile nachgemischt:

System (1): 1,425 phr Schwefel
1,20 phr MBS

System (2): 1,425 phr Schwefel
1,20 phr MBS
2,0 phr o-Nitrophenyl-pyrrolidinylsulfenamid

| | 1 | 2 |
|---|---|---|
| Reversionsbeständigkeit (%) nach 45 min/180°C bezogen auf $M_{300}$ | 65 | 94 |
| Anvulkanisationszeit $t_s$ (min) bei 130°C | 12,7 | 11,8 |
| Ausvulkanisationszeit $t_{90}$ (min) bei 150°C | 8,7 | 8,8 |

Das erfindungsgemäße System (2) gibt eine um 29% höhere Reversionsbeständigkeit als das Vergleichssystem (1) bei nur geringfügig verkürzter Anvulkanisationsbeständigkeit und praktisch gleicher Ausvulkanisationszeit wie bei System (1).

Im folgenden werden weitere Prüfdaten für die Systeme (1) und (2) wiedergegeben:

| | F | D | $M_{300}$ | H | E | Struktur n. Pohle |
|---|---|---|---|---|---|---|
| System (1) | | | | | | |
| 150°/15′ | 22,3 | 480 | 14,5 | 71 | 38 | 435 |
| 150°/20′ | 22,1 | 485 | 14,4 | 71 | 39 | 446 |
| 150°/30′ | 21,9 | 475 | 14,3 | 70 | 39 | 398 |
| 150°/45′ | 21,1 | 465 | 13,8 | 69 | 37 | 376 |
| 180°/45′ | 14,6 | 455 | 9,4 | 63 | 34 | 211 |
| 180°/60′ | 15,1 | 465 | 9,3 | 64 | 34 | 119 |
| System (2) | | | | | | |
| 150°/15′ | 22,6 | 505 | 14,1 | 70 | 38 | 410 |
| 150°/20′ | 22,7 | 490 | 14,0 | 72 | 37 | 365 |
| 150°/30′ | 21,5 | 450 | 14,7 | 70 | 38 | 372 |
| 150°/45′ | 21,6 | 455 | 14,8 | 71 | 37 | 367 |
| 180°/45′ | 17,7 | 395 | 13,9 | 70 | 33 | 174 |
| 180°/60′ | 15,2 | 355 | 13,6 | 70 | 32 | 148 |

Das erfindungsgemäße System (2) zeigt deutliche Vorteile vor dem Vergleichssystem (1) hinsichtlich Retention des Spannungswertes bei 300% Dehnung, Retention der Härte und Retention der Strukturfestigkeit bei einer Übervulkanisation bei 180° (45 bzw. 60 Minuten).

*Beispiel 2*

In einem Innenmischer wurden aus den im Beispiel (1) angeführten Bestandteilen eine Katuschukvormischung hergestellt. Auf einem Laborwalzwerk wurden folgende Produkte nachgemischt:

| | | |
|---|---|---|
| Vergleichssystem (A) | 1,425 | phr Schwefel |
| | 1,2 | phr MBS |
| Erfindungsgemäße Systeme 3-7 | 1,425 | phr Schwefel |
| | 1,20 | phr MBS |
| | je 2,0 | phr Beschleuniger variabel |

| | | Reversionsbeständigkeit nach 45 min/180°C (%) |
|---|---|---|
| Vergleichssystem (A) | | 65 |
| Erfindungsgemäßes System | 3 | 90 |
| | 4 | 89,5 |
| | 5 | 92 |
| | 6 | 94 |
| | 7 | 91,8 |

Die in den Beispielen 2, 3 und 4 verwendeten erfindungsgemässen Zusatzbeschleuniger sind:

| | | Schmp. (°C) |
|---|---|---|
| 2 | o-Nitrophenyl-pyrrolidinyl-sulfenamid | 50 - 52 |
| 3 | o-Nitrophenyl-piperidinylsulfenamid | Öl |
| 4 | o-Nitrophenyl-morpholinylsulfenamid | 88 - 90 |
| 5 | o-Nitrophenyl-(N-methyl)-piperazinyl)-sulfenamid | 55 - 57 |
| 6 | N,N'-Bis-(o-nitrophenyl)-piperazinyl-sulfenamid | 238 - 240 |
| 7 | o-Nitrophenyl-perhydroazepinylsulfenamid | 40 - 42 |

*Beispiel 3*

In einem Innenmischer wurden aus den im Beispiel (1) angeführten Bestandteilen eine Kautschukvormischung angefertigt. Auf einem Walzwerk wurden folgende Produkte nachgemischt:

| | |
|---|---|
| Vergleichssystem (B) | 1,8 phr Schwefel |
| | 0,9 phr MBS |
| Erfindungsgemäße Systeme 2-6 | 1,8 phr Schwefel |
| | 0,9 phr MBS |
| | je 2,0 phr Beschleuniger variabel |

In diesem Beispiel ist die Schwefeldosierung auf 1,8 phr erhöht.

| | | Reversionsbeständigkeit nach 45 min/180°C (%) |
|---|---|---|
| Vergleichssystem (B) | | 61,7 |
| Erfindungsgemäßes System | 2 | 91,6 |
| | 3 | 93,7 |
| | 4 | 88,3 |
| | 5 | 88,3 |
| | 6 | 88,8 |

Alle erfindungsgemäßen Systeme ergeben deutlich bessere Reversionsbeständigkeit als das Vergleichssystem B.

*Beispiel 4*

In einem Innenmischer wurde aus den im Beispiel (1) angeführten Bestandteilen eine Kautschukvormischung angefertigt. Auf einem Walzwerk wurden folgende Produkte nachgemischt:

| | |
|---|---|
| Vergleichssystem (C) | 2,0 phr Schwefel |
| | 0,7 phr MBS |
| Erfindungsgemäße Systeme 2-6 | 2,0 phr Schwefel |
| | 0,7 phr MBS |
| | je 2,0 phr Beschleuniger variabel |

In diesem Beispiel wurde die Schwefeldosierung auf 2,0 phr erhöht.

| | | Reversionsbeständigkeit nach 45 min/180°C (%) |
|---|---|---|
| Vergleichssystem (C) | | 58,6 |
| Erfindungsgemäßes System | 2 | 96,0 |
| | 3 | 97,5 |
| | 4 | 86,3 |
| | 5 | 85,1 |
| | 6 | 82,5 |

Die erfindungsgemäßen Systeme 2 - 6 geben deutlich höhere Reversionsbeständigkeit als das Vergleichssystem C).

**Patentansprüche**

1. Vulkanisierte Kautschukmischung aus natürlichem und/oder synthetischem Kautschuk aus halogenfreien Dienen und gegebenenfalls halogenfreien Comonomeren, einem Vulkanisationssystem bestehend aus

a) 0,1 bis 5 Gew.-Teile Schwefel oder 0,2 bis 10 Gew.-Teile eines Schwefelspenders,

b) 0,1 bis 5 Gew.-Teile eines Nitrogruppen-freien Beschleunigers der Mercapto- bzw. Sulfenamidgruppe,

c) 0 bis 5 Gew.-Teile eines konventionellen Zusatzbeschleunigers und

d) 0,1 bis 5 Gew.-Teile Nitrophenylsulfenamid, wobei sich die Gewichtsteile a) bis d) jeweils auf 100 Gewichtsteile Kautschuk beziehen,

und gegebenenfalls weiteren üblichen Zusätzen, dadurch gekennzeichnet, daß die Verbindung d) der Formel

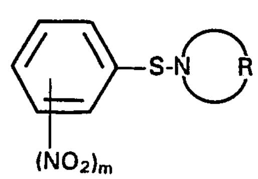

entspricht, in der

R zusammen mit dem Stickstoffatom einen

a) Morpholinyl-, Piperidinyl- oder Pyrrolidinyl-Rest, der durch ein oder zwei Methylgruppen oder eine zum Stickstoffatom o-ständige Oxogruppe substituiert sein kann, oder einen

b) Piperazinyl-Rest, der durch eine Methylgruppe, eine zum Stickstoffatom o-ständige Oxogruppe oder am zweiten Stickstoffatom durch

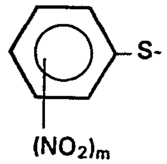

substituiert sein kann, bedeutet und 1 oder 2 ist, oder einen

c) Perhydroazepinyl-Rest.

2. Kautschukmischung nach Anspruch 1 worin das Vulkanisationssystem aus

a) 1,5 bis 2,5 Gew.-Teilen Schwefel oder 2 bis 5 Gew.-Teilen eines Schwefelspenders,

b) 0,4 bis 2 Gew.-Teilen eines Nitrogruppen-freien Beschleunigers der Mercapto- bzw. Sulfenamidgruppe,

c) 0 bis 1 Gew.-Teilen eines konventionellen Zusatzbeschleunigers und

d) 0,4 bis 2,5 Gew.-Teilen Nitrophenylsulfenamid der Formel gemäß Anspruch 1

besteht.

3. Kautschukmischung nach Ansprüchen 1 und 2, worin Komponente d) der Formel

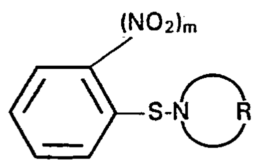

entspricht,

worin R zusammen mit dem Stickstoffatom Pyrrolidinyl, Piperidinyl, Morpholinyl, N-Methylpiperazinyl, N-Ethylpiperazinyl, Piperazinyl, 2-Methylpiperazinyl, sowie Perhydroazepinyl bedeutet.

4. Verfahren zur Vulkanisation von Kautschukmischungen nach Ansprüchen 1 bis 3, wonach man dem Kautschuk die Komponenten des Vulkanisationssystems getrennt oder gleichzeitig dem Kautschuk zugibt und anschließend in üblicher Weise vulkanisiert.

5. Nach Verfahren gemäss Anspruch 4 erhaltene Vulkanisate.

## Claims

1. A vulcanizable rubber mixture of natural and/or synthetic rubber of halogen-free dienes and optionally halogen-free comonomers, a vulcanization system consisting of

a) 0.1 to 5 parts by weight sulfur or 0.2 to 10 parts by weight of a sulfur donor,

b) 0.1 to 5 parts by weight of an accelerator with no nitro groups from the mercapto or sulfenamide group,

c) 0 to 5 parts by weight of a conventional additional accelerator and

d) 0.1 to 4 parts by weight nitrophenyl sulfenamide, the parts by weight of a) to d) being based in each case on 100 parts by weight rubber,

and, optionally, other standard additives, characterized in that compound d) corresponds to the following formula

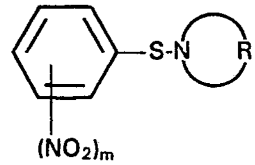

in which

R together with the nitrogen atom represents a

a) morpholinyl, piperidinyl or pyrrolidinyl radical which may be substituted by one or two methyl groups or by an oxo group in the o-position to the nitrogen atoms, or a

b) piperazinyl radical which may be substituted by a methyl group, an oxo group in the o-position to the nitrogen atom or at the second nitrogen atom by

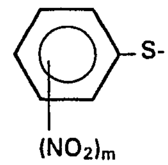

with m = 1 or 2, or a

c) perhydroazepinyl radical.

2. A rubber mixture as claimed in claim 1 in which the vulcanization system consists of

a) 1.5 to 2.5 parts by weight sulfur or 2 to 5 parts by weight of a sulfur donor,

b) 0.4 to 2 parts by weight of an accelerator with no nitro groups from the mercapto or sulfenamide group,

c) 0 to 1 part by weight of a conventional additional accelerator and

d) 0.4 to 2.5 parts by weight nitrophenyl sulfenamide corresponding to the formula in claim 1.

3. A rubber mixture as claimed in claims 1 and 2 in which component d) corresponds to the formula

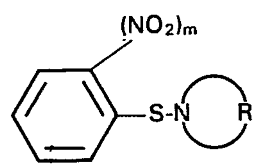

in which

R together with the nitrogen atom represents pyrrolidinyl, piperidinyl, morpholinyl, N-methyl piperazinyl, n-ethyl piperazinyl, piperazinyl, 2-methyl piperazinyl and perhydroazepinyl.

4. A process for the vulcanization of the rubber mixtures claimed in claims 1 to 3, in which the components of the vulcanization system are separately added to the rubber which is then vulcanized in the usual way.

5. Vulcanizates obtained by the process claimed in claim 4.

## Revendications

1. Mélange de caoutchouc vulcanisable consistant en caoutchouc naturel et/ou synthétique de diènes exempts d'halogènes et le cas échéant de comonomères exempts d'halogènes, un système vulcanisant consistant lui-même en:

a) 0,1 à 5 parties en poids de soufre ou 0,2 à 10 parties en poids d'un agent apportant du soufre,

b) 0,1 à 5 parties en poids d'un accélérateur exempt de groupes nitro, de la classe des mercaptans et des sulfénamides,

c) 0 à 5 parties en poids d'un accélérateur additionnel classique, et

d) 0,1 à 5 parties en poids d'un nitrophénylsulfénamide, les indications de parties en poids données en a) à d) ci-dessus se rapportant dans tous les cas à 100 parties en poids de caoutchouc,

et le cas échéant d'autres additifs usuels, caractérisé en ce que le composé d) répond à la formule

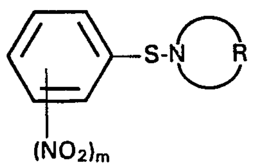

dans laquelle

R forme avec l'atome d'azote

a) un groupe morpholinyle, pipéridinyle ou pyrrolidinyle qui peut être substitué par un ou deux groupes méthyle ou par un groupe oxo en position ortho de l'atome d'azote, ou bien

b) un groupe pipérazinyle qui peut être substitué par un groupe méthyle, un groupe oxo en position ortho de l'atome d'azote, ou bien, sur le deuxième atome d'azote, par le groupe

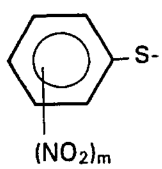

et m est égal à 1 ou 2, ou bien

c) un groupe perhydroazépinyle.

2. Mélange de caoutchouc selon la revendication 1, dans lequel le système vulcanisant consiste en:

a) 1,5 à 2,5 parties en poids de soufre ou 2 à 5 parties en poids d'un agent apportant du soufre,

b) 0,4 à 2 parties en poids d'un accélérateur exempt de groupes nitro, de la classe des mercaptans et des sulfénamides,

c) 0 à 1 partie en poids d'un accélérateur additionnel classique, et

d) 0,4 à 2,5 parties en poids d'un nitrophénylsulfénamide de formule donnée dans la revendication 1.

3. Mélange de caoutchouc selon les revendications 1 et 2, dans lequel le composant d) répond à la formule

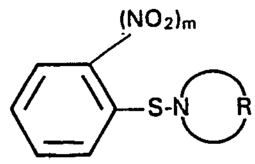

dans laquelle

R forme avec l'atome d'azote un groupe pyrrolidinyle, pipéridinyle, morpholinyle, N-méthylpipérazinyle, N-éthylpipérazinyle, pipérazinyle, 2-méthylpipérazinyle ou perhydroazépinyle.

4. Procédé pour vulcaniser des mélanges de caoutschouc selon les revendications 1 à 3, selon lequel on ajoute au caoutchouc, séparément ou simultanément, les composants du système vulcanisant puis on vulcanise de la manière habituelle.

5. Vulcanisats obtenus par un procédé selon la revendication 4.